# EUROPÄISCHE PATENTSCHRIFT

(11) **EP 0 978 176 B1**
(45) Veröffentlichungstag und Bekanntmachung des Hinweises auf die Patenterteilung: **21.07.2004**
(21) Anmeldenummer: 98930637.8
(22) Anmeldetag: 08.04.1998
(51) Int. Cl.: H04L 7/033, H04L 7/04, H04L 1/20

(54) **VERFAHREN ZUR DATENREGENERATION**
METHOD FOR REGENERATING DATA
PROCEDE DE REGENERATION DE DONNEES

(30) Priorität: 25.04.1997 DE 19717642
(43) Veröffentlichungstag der Anmeldung: 09.02.2000
(73) Patentinhaber: SIEMENS AKTIENGESELLSCHAFT, 80333 München (DE)
(72) Erfinder: BURGMEIER, Jürgen, D-81479 München (DE); STUMMER, Baldur, D-81543 München (DE)
(86) Internationale Anmeldenummer: PCT/DE1998/001015
(87) Internationale Veröffentlichungsnummer: WO 1998/049801

(56) Entgegenhaltungen:
- EP-A- 0 257 625
- DE-A- 4 102 857
- US-A- 4 360 926
- US-A- 5 182 467

## Beschreibung

Die Erfindung betrifft ein Verfahren zur Datenregeneration nach dem Oberbegriff des Patentanspruchs 1.

Durch Vergleich eines abgetasteten Datensignals mit dem noch nicht abgetasteten Datensignal wird ein Regelkriterium gewonnen, das zur Phasen- oder/und Frequenznachregelung eines Taktgenerators dient. Ein solcher Phasendetektor ist in IEEE, Journal of Lightwave Technology, Vol. LT-3, No. 6, Seite 1312-1314), beschrieben. Für extrem hohe Datenraten führen kleine toleranzbedingte oder durch Temperaturänderung verursachte Laufzeitunterschiede der verwendeten Bausteine bereits dazu, daß Signale nicht zum idealen Zeitpunkt abgetastet werden. Ebenso können Temperaturänderungen die Abtastschwelle verschieben, so daß auch eine optimale Unterscheidung zwischen beispielsweise zwei Zuständen nicht mehr gegeben ist. Vor allem verhindern aber führen Veränderungen der Sendeimpulsform, Einflüsse der Übertragungsstrecke, empfangsseitige Impulsverzerrungen und unsymmetrische Einflüsse auf die übertragenen beiden logischen Zustände die Festlegung einer optimalen Abtastschwelle und eines optimalen Abtastzeitpunktes.

Aus US 4 360 926 ist bekannt bei einem Phasenregelkreis zur Taktgewinnung einen Fehler erkennenden Code zu verwenden, wobei die Fehlerrate die Einstellgeschwindigkeit des Phasenregelkreises bestimmt. Ein versuchsweises Verschieben des Abtastzeitpunktes oder der Abtastschwelle würde zu vermehrten Übertragungsfehlern führen.

Aus US 5 182 467 ist ein Multiplexer bekannt, mit dessen Hilfe sowohl die Abtastzeitpunkte als auch die Abtastschwellen einstellbar sind.

Aufgabe der Erfindung ist es, ein Verfahren zur optimalen Datenregeneration anzugeben.

Diese Aufgabe wird durch das in Anspruch 1 angegebene Verfahren gelöst.

Vorteilhafte Weiterbildungen sind in den Unteransprüchen angegeben.

Das Verfahren hat den großen Vorteil, daß es aufgrund der Fehlerkorrektur gestattet, den Abtastzeitpunkt oder/und die Abtastschwelle versuchsweise zu verschieben, ohne daß das fehlerkorrigierte Ausgangssignal unzulässig hohe Datenraten aufweist.

Ebenso wie der Abtastzeitpunkt kann die Abtastschwelle variiert werden, um eine optimale Entscheidungsschwelle zu ermitteln.

Wenn die ermittelte Fehlerrate des versuchsweise eingestellten neuen Abtastzeitpunktes über der Fehlerrate des vorhergegangenen Abtastzeitpunktes liegt, wird der bisher verwendete Abtastzeitpunkt (oder die bisher verwendete Abtastschwelle) zunächst beibehalten und dann eine Verschiebung des Abtastzeitpunktes in der anderen Richtung versuchsweise durchgeführt, um den optimalen Abtastzeitpunkt zu ermitteln..

Vorteilhaft ist auch, daß der Abtastzeitpunkt und die Abtastschwelle nur innerhalb eines vorgegebenen Bereichs verstellt werden. Hierdurch ist sichergestellt, daß auch bei einer Fehlfunktion der Regelung die Datenregeneration noch arbeitet.

Bei verschachtelten fehlerkorrigierenden Codes (interleaved) kann die Überwachung und Nachregelung von Abtastzeitpunkt und Abtastschwelle in verschiedenen Datenpfaden erfolgen, die individuell optimiert werden. Dies parallele Verarbeitung ist bei hohen Datenraten auch aus technologischen Gründen erforderlich. Der andere Datenpfad kann als Vergleichsmaßstab dienen.

Die Bereiche, in denen sich der Abtastzeitpunkt und die Abtastschwelle bewegen, können von der vorher gemessenen Fehlerrate und von der während der Änderung auftretenden Fehlerrate bestimmt werden.

Sinnvoll ist es auch, daß bei einer neu gestalteten verbindung zunächst die Bereiche zur Neueinstellung von Abtastzeitpunkt und Abtastschwelle sowie der Änderungsgeschwindigkeit größer gewählt werden als bei einer bereits existierenden Verbindung.

Vorteilhaft bei diesem Verfahren ist auch, daß kein zweiter Datenpfad vorgesehen zu werden braucht, der nur zur Festlegung des optimalen Abtastzeitpunktes und der optimalen Abtastschwelle dient, die dann auf den eigentlichen Datenpfad übertragen werden. Bei diesem Verfahren kann Aufgrund von Toleranzen in den verschiedenen Datenpfaden eine optimale Einstellung und Datenregeneration nicht immer erreicht werden.

Ausführungsbeispiele der Erfindung werden anhand von Figuren näher erläutert.

Es zeigen
- Figur 1: ein Prinzipschaltbild der erfindungsgemäßen Anordnung,
- Figur 2: eine Variante dieser Anordnung,
- Figur 3: eine weitere Variante für separat gesicherte Datenströme und
- Figur 4: ein Zeitdiagramm.

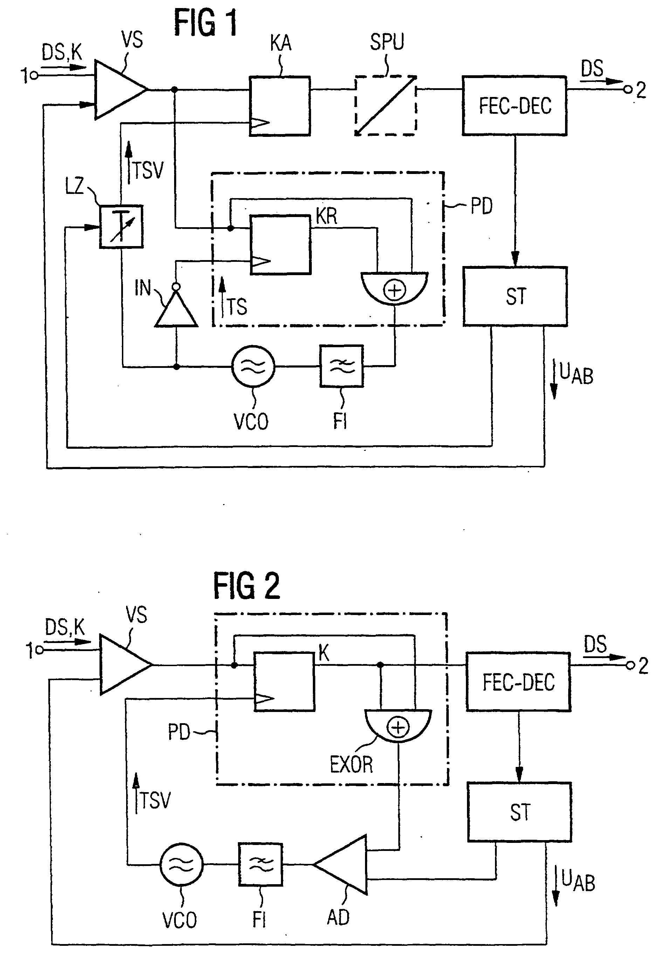

In Figur 1 ist eine Anordnung zur Realisierung des erfindungsgemäßen Verfahrens als Prinzipschaltbild dargestellt. Das übertragene Datensignal DS inklusive der Fehlerkorrektur dienenden Kontollbits K wird einem Dateneingang 1 einer Entscheidungsstufe ES zugeführt. Deren Ausgang ist mit einem Phasendetektor PD verbunden, der ein Exklusiv-Oder-Gatter EXOR zur Gewinnung einer Regelspannung enthält, die über ein Filter FI einen Oszillator VCO steuert. Dieser gibt ein Taktsignal TS ab, das zur Abtastung des empfangenen Datensignals DS, K über einen Inverter IN oder ein Laufzeitglied geführt eine Regenerator Abtastkippstufe KR triggert. Dasselbe Taktsignal ist über ein einstellbares Laufzeitglied LZ geführt und triggert als verstellbares Abtastsignal TSV eine Abtastkippstufe KA, die das abgetastete Datensignal DS, K an ihrem Datenausgang zur Weiterverarbeitung abgibt. Das Datensignal wird einem FEC-Decodierer zugeführt, der anhand der Kontrollbits eine Fehlererkennung und/oder Fehlerkorrektur durchführt und am Datenausgang 2 das korrigierte Datensignal DS abgibt. Bei hohen Datenraten und bei verschachtelter Codierung kann ein Seriell-Parallel-Umsetzer zwischen dem Ausgang der Abtastkippstufe KA1 und dem FEC-Decoder eingeschaltet sein.

Eine Steuerung überprüft in vorgegebenen Zeitintervallen die Übertragungsfehlerrate anhand der Korrekturhäufigkeit (und gegebenenfalls mittels einer zusätzlichen Fehlererkennung). Diese Zeitintervalle können einer Vielzahl von Datenblöcken entsprechen.

Um einen optimalen Abtastzeitpunkt einzustellen, verändert die Steuerung versuchsweise die Laufzeit des variablen Laufzeitgliedes LZ. Der Veränderung der Laufzeit entspricht ein Verschieben des Abtastzeitpunktes T_{A}, das nur innerhalb eines gewissen Bereiches BE erfolgen darf. Als eine weitere Grenze kann die ergebende Fehlerrate verwendet werden, die stets beträchtlich unterhalb der Fehlerkorrekturfähigkeit des verwendeten Codes liegen sollte, aber auch abhängig von der zuletzt gemessenen Fehlerrate sein kann.

Die Verschiebung des Abtastzeitpunktes erfolgt zunächst in einer Richtung. Gleichzeitig wird die Fehlerrate gemessen. Verringert sich die Fehlerrate wird der Abtastzeitpunkt verschoben. Dies kann um einen festen Wert erfolgen, beispielsweise indem die versuchsweise durchgeführte Verschiebung zu dem neuen Soll-Abtastzeitpunkt geführt hat. Wird die Fehlerrate dagegen größer, erfolgt eine versuchsweise Verschiebung in der anderen Richtung, der zunächst eine weitere Messung in der bisherigen Sollage vorangehen kann.

Es können aber auch zunächst versuchsweise Verschiebungen in beiden Richtungen bezogen auf den letzten Sollabtastzeitpunkt vorgenommen werden. Anhand der Messungen wird der neue Abtastzeitpunkt ermittelt, bei dem die Fehlerrate ein Minimum ist. Wenn bei dem neuen Abtastzeitpunkt eine höhere Fehlerrate als bei dem früheren Abtastzeitpunkt zu erwarten ist, wird keine Neueinstellung durchgeführt, sondern zunächst die Fehlerrate erneut gemessen, um festzustellen, ob evtl. die Übertragungsstrecke schlechter geworden ist.

Die Einstellung des Abtastzeitpunktes kann auch in sehr kleinen konstanten Schritten - also unabhängig von der Größe der ermittelten Abweichung - erfolgen. Ein lokales Minimum der Fehlerrate muß vermieden werden. Zu bestimmten Zeiten oder bei neu geschalteten Verbindungen kann daher zunächst mit größeren versuchsweisen Verstellungen begonnen werden.

Auch sollte die Steuerung eine Tiefpaßfunktion beinhalten, die erst nach einer erheblichen Anzahl von Datenblöcken dann ein endgültiges Verschieben des Abtastzeitpunktes bewirkt, wenn der neu ermittelte Abtastzeitpunkt sicher zu besseren Fehlerraten führt.Die Anzahl der Einstellvorgänge kann auch auf bestimmte Zeiten begrenzt werden.

Die Entscheidungs-/Abtastschwelle kann nach demselben Modus einge-stellt werden, indem die Vergleichsspannung U_{AB} der Ver-gleichsstufe VS variiert wird. Die Kombination beider Maßnahmen bewirkt eine optimale Regeneration des empfangenen Datensignal.

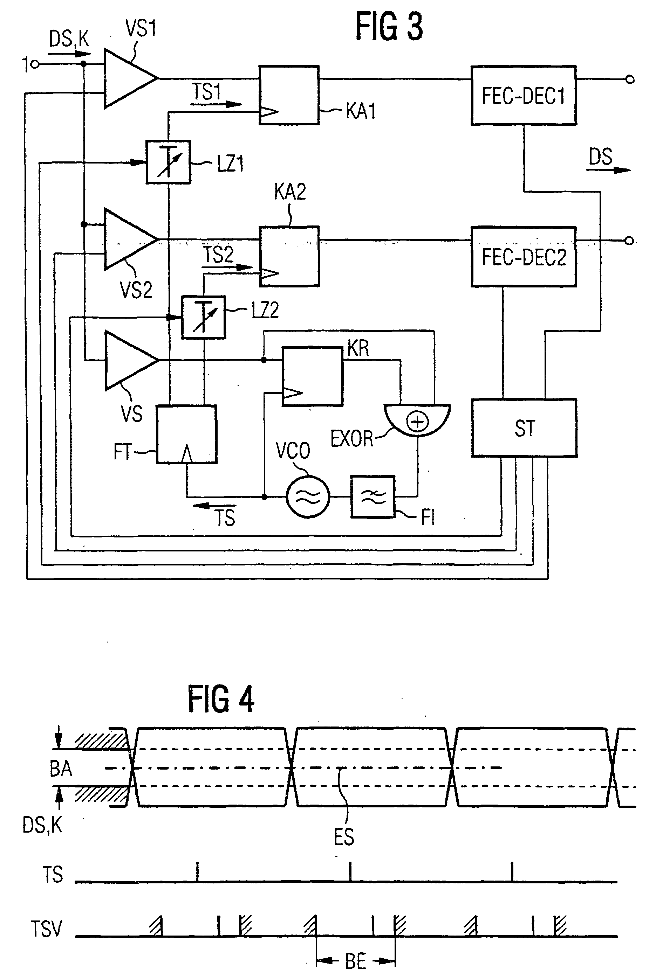

Der Bereich BE, in dem eine Verschiebung des Abtastzeitpunktes erfolgt, und der Bereich BA, in dem eine Verschiebung der Entscheidungsschwelle ES erfolgt, können so begrenzt werden, daß durch die Suchvorgänge die Fehlerrate des korrigierten Datensignals gering bleibt (Figur 4).

Zur Verschiebung des Abtastzeitpunktes muß kein Laufzeitglied verwendet werden. Es kann ebenso in die Phasenregelschleife eingegriffen werden. Dies ist in Figur 2 prinzipiell dargestellt. Der Ausgang der Vergleichsstufe VS ist direkt mit dem Eingang des Phasendetektor verbunden, an dessen Ausgang der FEC-Decodierer FEC-DEC eingeschaltet ist. Die Steuerung ST wirkt hier über einen Addierer AD auf den Eingang des gesteuerten Oszillators VCO. Durch das dem Regelsignal RE überlagerte Steuerkriterium SK wird das Taktsignal gegenüber dem Datensignal verschoben.

Für die Abtastkippstufe KA und die Regenerator-Abtastkippstufe KR können auch seperate Vergleichsstufen verwendet werden.

In Figur 3 werden ein durch miteinander verschachtelte fehlerkorrigierende Codes gesicherte Datensignal DS und die jeweils zugehörigen Kontrollbits K in zwei Datenströme aufgeteilt. Es sind zwei Entscheidungsstufen VS1 und VS2 vorgesehen, denen jeweils eine Abtastkippstufe KA1 bzw. KA2 nachgeschaltet ist. Die Kippstufen werden mit Takten TS1 bzw. TS2 angesteuert, die durch Frequenzteilung aus dem Taktsignal TS gewonnen werden. Jeder Datenstrom DS1, DS2 wird einem eigenen FEC-Decoder FEC-DEC1 bzw. FEC-DEC2 zugeführt.

Über verschiedene Laufzeitglieder LZ1 und LZ2 sind beide Abtasttakte steuerbar. Die Steuerung variiert jeweils nur für einen Datenpfad den Abtastzeitpunkt und die Abtastschwelle und führt eine individuelle Optimierung durch. Es besteht die Möglichkeit, das Ergebnis nicht nur mit den vorhergegangenen Meßergebnissen, sondern auch mit den Meßergebnissen des anderen Datenstromes zu vergleichen. Geänderte Übertragungsbedingungen können so schneller berücksichtigt werden.

## Patentansprüche

1. Verfahren zur Datenregeneration, bei dem aus einem codierten Empfangssignal (DS) ein Regelkriterium für einen Phasenregelkreis gewonnen wird, der ein Abtast-Taktsignal (TS) erzeugt, und fortlaufend die Übertragungsfehlerrate überwacht wird, um damit den Phasenregelkreis zu steuern,
**dadurch gekennzeichnet,**
**daß** versuchsweise durch eine gesteuerte Phasenverschiebung des Abtast-Taktsignals (TS,) gegenüber dem Empfangssignal (DS) der Abtastzeitpunkt (T_{A}) geändert wird und daß aufgrund der bei verschiedenen Abtastzeitpunkten gemessenen Übertragungsfehlerraten ein optimaler Abtastzeitpunkt (T_{A}) ermittelt und eingestellt werden.

2. Verfahren zur Datenregeneration, bei dem aus einem codierten Empfangssignal (DS) ein Regelkriterium für einen Phasenregelkreis gewonnen wird, der ein Abtast-Taktsignal (TS) erzeugt, und fortlaufend die Übertragungsfehlerrate überwacht wird, um damit den Phasenregelkreis zu steuern,
**dadurch gekennzeichnet,**
**daß** versuchsweise die Entscheidungsschwelle (ES) für das Empfangssignal (DS) geändert wird und aufgrund der bei verschiedenen Schwellen gemessenen Fehlerraten eine optimale Entscheidungsschwelle ermittelt und eingestellt wird.

3. Verfahren nach Anspruch 1 und 2,
**dadurch gekennzeichnet,**
**daß** der Abtastzeitpunkt (T_{A}) und die Entscheidungsschwelle (ES) eingestellt werden.

4. Verfahren nach einem der vorhergehenden Ansprüche,
**dadurch gekennzeichnet,**
**daß** der Abtastzeitpunkt (T_{A}) und/oder die Entscheidungsschwelle (ES) jeweils nur innerhalb eines vorgegebenen Bereichs (BE, BA) verstellt werden.

5. Verfahren nach einem der vorhergehenden Ansprüche,
**dadurch gekennzeichnet,**
**daß** der Abtastzeitpunkt (T_{A}) und die Entscheidungsschwelle (ES) nur soweit verstellt werden, bis eine vorgegebene Fehlerrate gemessen wird.

6. Verfahren nach einem der vorhergehenden Ansprüche,
**dadurch gekennzeichnet,**
**daß** ein versuchsweise eingestellter neuer Abtastzeitpunkt (T_{A}) oder eine versuchsweise eingestellte neue Entscheidungsschwelle (ES) nur beibehalten wird, wenn die für die neue Einstellung ermittelte Fehlerrate unter der Fehlerrate eines vorangegangenen Zeitintervalls liegt.

7. Verfahren nach einem der vorhergehenden Ansprüche,
**dadurch gekennzeichnet,**
**daß** nach einer Verschiebung des Abtastzeitpunktes (T_{A}) oder der Entscheidungsschwelle (ES) in nur einer Richtung eine neue dauerhafte Sollage eingestellt wird, wenn die gemessene Fehlerrate kleiner geworden ist.

8. Verfahren nach einem der Ansprüche 1 bis 6,
**dadurch gekennzeichnet,**
**daß** erst nach einer Verschiebung des Abtastzeitpunktes (T_{A}) und/oder der Entscheidungsschwelle (ES) in beiden Richtungen aus den gemessenen Fehlerraten der optimale Abtasstzeitpunkt bzw. die optimale Entscheidungsschwelle ermittelt und eine Neueinstellung durchgeführt wird.

9. Verfahren nach einem der vorhergehenden Ansprüche,
**dadurch gekennzeichnet,**
**daß** die Verschiebung des Abtastzeitpunktes und/oder der Entscheidungsschwelle (ES) jeweils um einen vorgegebene Betrag erfolgt.

10. Verfahren nach einem der vorhergehenden Ansprüche,
**dadurch gekennzeichnet,**
**daß** die Neueinstellungen auf bestimmte Zeiträume beschränkt werden.

11. Verfahren nach einem der vorhergehenden Ansprüche,
**dadurch gekennzeichnet,**
**daß** mehrere verschachtelte Codes zur Datensicherung verwendet werden, daß empfangsseitig die Datenregeneration in verschiedenen Verarbeitungspfaden erfolgt und die Übertragungsfehler separat ermittelt werden,
**daß** jeweils nur für einen von mindestens zwei Datenströmen die Abtastzeitpunkte (T_{A}) oder/und die Entscheidungsschwelle (ES) variiert wird.

12. Verfahren nach einem der vorhergehenden Ansprüche,
**dadurch gekennzeichnet,**
**daß** die Abtastzeitpunkte mit Hilfe eines einstellbaren Laufzeitglieds (LZ) verschoben werden.

13. Verfahren nach einem der Ansprüche 1 bis 11,
**dadurch gekennzeichnet,**
**daß** die Abtastzeitpunkte (T_{A}) durch eine dem steuerbaren Oszillator (VCO) der Phasenschleife (PLL) zugeführte Korrekturspannung (UK) verschoben werden.

## Claims

1. Method of data regeneration, wherein a control criterion for a phase-locked loop which generates a sampling clock signal (TS) is obtained from a coded receive signal (DS), and wherein the transmission error rate is continuously monitored in order to control the phase-locked loop with said sampling clock signal
**characterized in that**
the sampling time (T_{A}) is changed on a trial basis with respect to the receive signal (DS) by controlled phase shifting of the sampling clock signal (TS) and
**in that** an optimal sampling time (T_{A}) is determined and set on the basis of the transmission error rates measured for different sampling times.

2. Method of data regeneration, wherein a control criterion for a phase-locked loop which generates a sampling clock signal (TS) is obtained from a coded receive signal (DS), and wherein the transmission error rate is continuously monitored in order to control the phase-locked loop with said sampling clock signal
**characterized in that**
the decision threshold (ES) for the receive signal (DS) is changed on a trial basis and an optimal decision threshold is determined and set on the basis of the transmission error rates measured for different thresholds.

3. Method according to Claim 1 and 2,
**characterized in that**
the sampling time (T_{A}) and decision threshold (ES) are set.

4. Method according to one of the preceding Claims,
**characterized in that**
the sampling time (T_{A}) and/or decision threshold (ES) are/is in each case only adjusted within a pre-defined range (BE, BA).

5. Method according to one of the preceding Claims,
**characterized in that**
the sampling time (T_{A}) and decision threshold (ES) are only adjusted until a pre-defined error rate is measured.

6. Method according to one of the preceding Claims,
**characterized in that**
a new sampling time (T_{A}) set on a trial basis or a new decision threshold (ES) set on a trial basis will only be retained if the error rate determined for the new setting is below the error rate of a preceding interval.

7. Method according to one of the preceding Claims,
**characterized in that**
after the sampling time (T_{A}) or decision threshold (ES) has been shifted in only one direction, a new permanent setpoint location will be set if the measured error rate has fallen.

8. Method according to one of the Claims 1 to 6,
**characterized in that**
the optimal sampling time or, as the case may be, optimal decision threshold will only be determined from the measured error rates and a new setting carried out when the sampling time (T_{A}) and/or decision threshold (ES) have/has been shifted in both directions.

9. Method according to one of the preceding Claims,
**characterized in that**
the sampling time and/or decision threshold (ES) are/is in each case shifted by a pre-defined amount.

10. Method according to one of the preceding Claims,
**characterized in that**
the new settings are restricted to specific periods of time.

11. Method according to one of the preceding Claims,
**characterized in that**
several interleaved codes are employed for data safeguarding, **in that** on the receiving side the data regeneration takes place in different processing paths and the transmission errors are determined separately and
**in that** the sampling times (T_{A}) or/and decision threshold (ES) is/are varied in each case for only one of at least two data streams.

12. Method according to one of the preceding Claims
**characterized in that**
the sampling times are shifted with the aid of a settable delay unit (LZ).

13. Method according to one of the Claims 1 to 11
**characterized in that**
the sampling times (T_{A}) are shifted by means of a correction voltage (UK) routed to the controllable oscillator (VCO) of the phase-locked loop (PLL).

## Revendications

1. Procédé permettant de régénérer des données, dans lequel, à partir d'un signal de réception codé (DS), est obtenu un critère de régulation pour un circuit de régulation de phase qui produit un signal de cadence d'exploration (TS) et dans lequel le taux d'erreurs de la transmission est surveillé en permanence pour, ainsi, commander le circuit de régulation de phase,
**caractérisé par le fait**
**que** l'instant d'exploration (T_{A}) est modifié à titre d'essai grâce à une variation de phase contrôlée du signal de cadence d'exploration (TS) par rapport au signal de réception (DS) et
**que**, sur la base des taux d'erreurs de transmission mesurés pour différents instants d'exploration, on détermine et on règle un instant d'exploration (T_{A}) optimum.

2. Procédé permettant de régénérer des données, dans lequel, à partir d'un signal de réception codé (DS), est obtenu un critère de régulation pour un circuit de régulation de phase qui produit un signal de cadence d'exploration (TS) et dans lequel le taux d'erreurs de la transmission est surveillé en permanence pour, ainsi, commander le circuit de régulation de phase,
**caractérisé par le fait**
**que** le seuil de décision (ES) pour le signal de réception (DS) est modifié à titre d'essai et que, sur la base des taux d'erreurs mesurés pour différents seuils, on détermine et on règle un seuil de décision optimum.

3. Procédé selon la revendication 1 et 2
**caractérisé par le fait**
**que** l'instant d'exploration (T_{A}) et le seuil de décision (ES) sont réglés.

4. Procédé selon l'une des revendications précédentes
**caractérisé par le fait**
**que** l'instant d'exploration (T_{A}) et/ou le seuil de décision (ES) ne sont réglés chacun qu'à l'intérieur d'une plage donnée (BE, BA).

5. Procédé selon l'une des revendications précédentes
**caractérisé par le fait**
**que** l'instant d'exploration (T_{A}) et le seuil de décision (ES) ne sont modifiés que dans la mesure où un taux d'erreurs donné est mesuré.

6. Procédé selon l'une des revendications précédentes
**caractérisé par le fait**
**qu'**un nouvel instant d'exploration (T_{A}) réglé à titre d'essai ou un seuil de décision (ES) réglé à titre d'essai ne sont conservés que si le taux d'erreurs constaté pour le nouveau réglage est inférieur au taux d'erreurs d'un intervalle de temps précédent.

7. Procédé selon l'une des revendications précédentes
**caractérisé par le fait**
**que**, après un déplacement de l'instant d'exploration (T_{A}) ou une modification du seuil de décision (ES) dans un seul sens, une nouvelle situation permanente de consigne est réglée lorsque le taux d'erreurs mesuré est devenu plus faible.

8. Procédé selon l'une des revendications 1 à 6
**caractérisé par le fait**
**que** l'instant d'exploration optimum et, respectivement, le seuil de décision optimum ne sont déterminés à partir des taux d'erreurs mesurés et un nouveau réglage exécuté, qu'après un déplacement de l'instant d'exploration (T_{A}) et/ou une modification du seuil de décision (ES) dans les deux sens.

9. Procédé selon l'une des revendications précédentes
**caractérisé par le fait**
**que** le déplacement de l'instant d'exploration (T_{A}) et/ou la modification du seuil de décision (ES) ont lieu d'une valeur donnée.

10. Procédé selon l'une des revendications précédentes
**caractérisé par le fait**
**que** les nouveaux réglages sont limités à des intervalles de temps déterminés.

11. Procédé selon l'une des revendications précédentes
**caractérisé par le fait**
**que** plusieurs codes entrelacés sont utilisés pour la protection des données, que, du côté réception, la régénération des données a lieu sur des cheminements de traitement différents et les erreurs de transmission sont détectées séparément,
**que** les instants d'exploration (T_{A}) et/ou le seuil de décision (ES) ne sont modifiés, dans chaque cas, que pour l'un d'au moins deux flux de données.

12. Procédé selon l'une des revendications précédentes
**caractérisé par le fait**
**que** les instants d'exploration sont déplacés à l'aide d'un élément de temporisation réglable (LZ).

13. Procédé selon l'une des revendications 1 à 11
**caractérisé par le fait**
**que** les instants d'exploration (T_{A}) sont déplacés par une tension de correction (UK) appliquée à l'oscillateur contrôlable (VCO) de la boucle de phase (PLL).
